# EUROPÄISCHE PATENTSCHRIFT

(11) **EP 1 593 873 B1**
(45) Veröffentlichungstag und Bekanntmachung des Hinweises auf die Patenterteilung: **23.07.2008**
(21) Anmeldenummer: 05101945.3
(22) Anmeldetag: 14.03.2005
(51) Int. Cl.: F16F 9/04

(54) **Luftfeder mit Rollbalg, Abrollkolben und Spannteller**
Air spring with rolling bellows, piston and clamping plate
Ressort pneumatique avec soufflet roulant, piston de déroulage et dispositif de serrage

(30) Priorität: 03.05.2004 DE 102004021603
(43) Veröffentlichungstag der Anmeldung: 09.11.2005
(73) Patentinhaber: ContiTech Luftfedersysteme GmbH, 30165 Hannover (DE)
(72) Erfinder: Szyszka, Axel, 30159 Hannover (DE); Hlawatczek, Matthias, 30659 Hannover (DE)
(74) Vertreter: Finger, Karsten

(56) Entgegenhaltungen:
- DE-A1- 10 057 921
- DE-A1- 19 720 776
- GB-A- 1 248 025
- US-A- 3 475 015
- US-B1- 6 234 460

## Beschreibung

Die Erfindung betrifft eine Luftfeder, bei der ein Rollbalg mit mindestens einer Öffnung mittels eines Spanntellers auf einem Abrollkolben mit einem Rand und einer Abrollkante befestigt ist, wobei der Rollbalg Festigkeitsträger und einen um die Öffnung herum angeordneten Wulst mit einem Kern aufweist und die Festigkeitsträger um den Kern herumgeschlungen sind, so dass die Festigkeitsträger einen versteiften Balgwandbereich bilden, in dem die Festigkeitsträger doppelt liegen, und bei der der Spannteller einen Spanntellerboden und eine Wulstaufnahme zur Befestigung des Rollbalges auf dem Abrollkolben der Rollbalgluftfeder aufweist.

Luftfedern dieser Art sind bereits seit längerem, vorzugsweise bei Nutzfahrzeugen im Einsatz. Der Spannteller dieser Luftfedern soll den Luftfeder-Rollbalg auf dem Abrollkolben fixieren, wobei der Balg auch am Spannteller fest vulkanisiert sein kann. Meist sind die Spannteller mittels Schrauben am Abrollkolben festgezogen, wobei der Luftfeder-Rollbalg zwischen dem Spannteller und dem Kolben fest verspannt ist. Dabei wird das Balginnere gegen die Außenumgebung luftdicht abgedichtet. Bei einigen Ausführungen von Luftfedern weist der Spannteller Löcher auf, so dass ein Luftaustausch zwischen dem ebenfalls entsprechende Löcher aufweisenden Kolben stattfinden kann. Dabei wird durch das Verspannen des Balges zwischen Spannteller und Kolben das gesamte Innere von Balg und Kolben gegen die Außenumgebung luftdicht abgedichtet. Derartige Luftfedern sind beispielsweise in der DE 296 190 81 U1, der JP 11-287278 oder der US 5 921 532 gezeigt.

Zur Kraftübertragung dient in einem Luftfeder-Rollbalg der Festigkeitsträger, der meist aus einer oder mehreren Cord-Gewebelagen besteht und an den Balgöffnungen um ringförmige Kerne herumgeschlungen ist. Dadurch entstehen an den Balgenden Wülste, die bei der Montage in entsprechenden Sicken oder Absätzen der Spannteller zu liegen kommen und dort auch festvulkanisiert sein können. Üblicherweise liegt der Wulst am Aussenrand des Spanntellers an, so dass der Wulst nicht in einer ihn annähernd vollständig umfassenden Sicke, sondern durch einen Absatz im Außenbereich des Spanntellers zwischen Spannteller und Kolben eingeklemmt ist. Durch das Umschlingen der Kerne mit den Festigkeitsträgern kommt es im Bereich der Enden des Balges zu einer Balgwandversteifung, da hier doppelt so viele Festigkeitsträgerlagen aufeinanderliegen, wie in der restlichen Balgwand. Soll die Luftfeder aus dem vollständig ausgefedertem Zustand wieder über den Kolbenrand einfedern, behindert die genannte Balgwandversteifung den Abrollvorgang des Balges über den oberen Kolbenrand. Vor allem im drucklosen Zustand führt dies häufig zu Aufstauchungen und Einfaltungen des Balges, was zur vorzeitigen Zerstörung des Balges führen kann.

Derartige Luftfedern sind in der GB-A-1 248 025 und der US-A-3 475 015 gezeigt. Die Abrollbälge der dargestellten Luftfedern weisen Wülste auf, die durch korrespondierende Nuten in den Spanntellern auf den Abrollkolben fixiert sind. Bei diesen Ausführungsformen liegen die Wülste jeweils im äußeren Bereich der möglichen Einspannung, so dass der Bereich der versteiften Balgwand jeweils an der Abrollkante der Abrollkolben liegt und dadurch die Abrollung des Balges in drucklosem Zustand behindert.

Der Erfindung liegt die Aufgabe zugrunde, eine Luftfeder mit einer Anordnung von Spannteller und Luftfeder-Rollbalg zu schaffen, die den genannten Nachteil vermeidet und ein Abrollen des Luftfeder-Rollbalges über die Kante des Abrollkolbens im drucklosen Zustand erleichtert.

Diese Aufgabe wird dadurch gelöst, dass die Wulstaufnahme als ringförmige, zur Hauptachse des Spanntellers konzentrische, im Bodenbereich des Spanntellers angeordnete Nut mit mittlerem Durchmesser kleiner als der Außendurchmesser des Spanntellers ausgebildet ist, wobei die Durchmesser der Öffnung und der Nut derart bemessen sind, dass der versteifte Balgwandbereich vom Kolbenrand entfernt in Richtung auf die Mittelachse der Luftfeder verlagert ist und zwischen Spannteller und Abrollkolben zu liegen kommt und nicht in die Abrollkante hineinreicht.

Diese Anordnung hat den Vorteil, dass die Versteifung der Balgwand damit für den Abrollvorgang ohne Bedeutung ist und der Balg ohne Behinderung auch im drucklosen Zustand über den Kolbenrand abrollen kann.

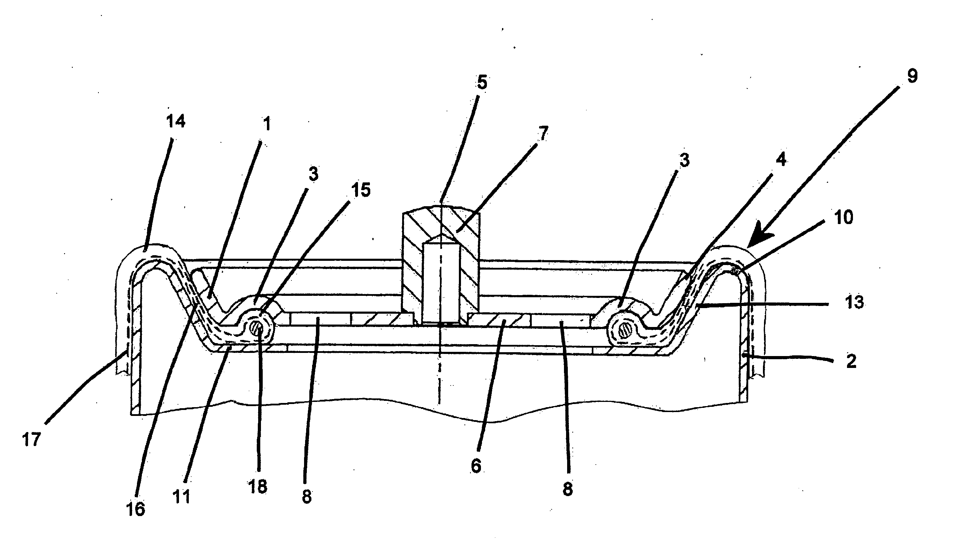

Anhand der Zeichnung wird nachstehend ein Ausführungsbeispiel der Erfindung näher erläutert.

Die Figur zeigt den Spannteller 1 und einen oberen Abschnitt des Abrollkolbens 2 einer Rollbalg-Luftfeder. Der Spannteller 1 weist eine umlaufende ringförmige Sicke 3 auf, die vom äußeren Rand 4 des Spanntellers 1 beabstandet ist und zur Hauptachse 5 des Spanntellers 1 konzentrisch ist. Weiterhin weist der Spannteller 1 eine fest mit dem Boden 6 des Spanntellers 1 verschweißte Gewindebuchse 7 auf. Im Boden 6 des Spanntellers 1 sind auf dem Umfang verteilt Bohrungen 8 angeordnet, von denen hier zwei gezeigt sind.

Der Abrollkolben 2 weist am oberen Rand 9 eine abgerundete Abrollkante 10 auf. Der Deckel 11 des Kolbens 2 weist eine Bohrung 12 auf. Zwischen dem Deckel 11 und der Abrollkante 10 des Kolbens 2 ist eine Klemmschräge 13 angeordnet.

Der Spannteller 1 ist mit einer hier nicht gezeigten, in die Gewindebuchse 7 geschraubten Schraube gegen den Kolben 2 verspannt und verklemmt dabei einen Luftfeder-Rollbalg 14 zwischen Spannteller 1 und Abrollkolben 2. In der Sicke 3 ist im fertig montierten Zustand ein Wulst 15 des Luftfeder-Rollbalges eingespannt. Ein Balgwandteil 16 ist durch eine in diesem Bereich doppelt liegende Lage eines Festigkeitsträgers 17 gekennzeichnet, wobei der Festigkeitsträger 17 dadurch doppelt zu liegen kommt, dass der Festigkeitsträger 17 im Wulst 15 um einen ringförmigen Kern 18 herumgeschlungen ist und zur Erreichung der notwendigen Tragfähigkeit noch eine bestimmte Strecke wieder in der Balgwand 16 zurückgeführt werden muss. Dieser an den Wulst 15 anschließende, steife Balgwandteil 16 des Balges 14 kommt erfindungsgemäß im Bereich der Klemmschräge 13 zu liegen und rollt nicht über die Abrollkante 10 auf dem Kolben 2 ab.

### Bezugszeichenliste

- 1: Spannteller
- 2: Abrollkolben
- 3: ringförmige Sicke
- 4: Rand des Spanntellers 1
- 5: Hauptachse des Spanntellers 1
- 6: Boden des Spanntellers 1
- 7: Gewindebuchse
- 8: Bohrungen im Boden 6 des Spanntellers 1
- 9: oberer Rand des Abrollkolbens 2
- 10: Abrollkante des Abrollkolbens 2
- 11: Deckel des Abrollkolbens 2
- 12: Bohrung im Deckel 11 des Abrollkolbens 2
- 13: Klemmschräge
- 14: Rollbalg
- 15: Wulst des Rollbalges 14
- 16: Balgwand
- 17: Festigkeitsträger des Rollbalges 14
- 18: Kern des Rollbalges 14

## Patentansprüche

1. Luftfeder,
bei der
ein Rollbalg (14) mit mindestens einer Öffnung mittels eines Spanntellers (1) auf einem Abrollkolben (2) mit einem Rand (9) und einer Abrollkante (10) befestigt ist,
wobei der Rollbalg (14) Festigkeitsträger (17) und einen um die Öffnung herum angeordneten Wulst (15) mit einem Kern (18) aufweist und die Festigkeitsträger (17) um den Kern (18) herumgeschlungen sind, so dass die Festigkeitsträger (17) einen versteiften Balgwandbereich bilden, in dem die Festigkeitsträger (17) doppelt liegen und
bei der
der Spannteller (1) einen Spanntellerboden (6) und eine Wulstaufnahme (3) zur Befestigung des Rollbalges (14) auf dem Abrollkolben (2) der Rollbalgluftfeder aufweist,
**dadurch gekennzeichnet,**
**dass** die Wulstaufnahme als ringförmige, zur Hauptachse (5) des Spanntellers (1) konzentrische, im Bodenbereich (6) des Spanntellers (1) angeordnete Nut (3) mit mittlerem Durchmesser kleiner als der Außendurchmesser des Spanntellers (1) ausgebildet ist,
wobei die Durchmesser der Öffnung und der Nut (3) derart bemessen sind, dass der versteifte Balgwandbereich vom Kolbenrand (9) entfernt in Richtung auf die Mittelachse der Luftfeder verlagert ist und zwischen Spannteller (1) und Abrollkolben (2) zu liegen kommt und nicht in die Abrollkante (10) hineinreicht.

## Claims

1. Air spring, in which a rolling bellows (14) having at least one opening is fastened by means of a clamping plate (1) on a rolling piston (2) having a rim (9) and a rolling edge (10), the rolling bellows (14) having strength supports (17) and a bead (15) which is arranged around the opening and has a core (18) and the strength supports (17) being looped around the core (18), with the result that the strength supports (17) form a reinforced bellows wall region, in which the strength supports (17) lie in a double manner, and in which air spring the clamping plate (1) has a clamping plate base (6) and a bead receptacle (3) for fastening the rolling bellows (14) on the rolling piston (2) of the rolling bellows air spring, **characterized in that** the bead receptacle is configured as an annular groove (3) which is concentric with respect to the main axis (5) of the clamping plate (1), is arranged in the base region (6) of the clamping plate (1) and has a mean diameter which is smaller than the external diameter of the clamping plate (1), the diameters of the opening and the groove (3) being dimensioned in such a way that the reinforced bellows wall region is displaced away from the piston rim (9) in the direction of the centre axis of the air spring, comes to lie between the clamping plate (1) and the rolling piston (2) and does not reach into the rolling edge (10).

## Revendications

1. Amortisseur pneumatique, dans lequel un soufflet déroulant (14) qui présente au moins une ouverture est fixé au moyen d'un plateau de serrage (1) sur un piston déroulant (2) qui présente une bordure (9) et un bord déroulant (10), le soufflet déroulant (14) présentant des renforts (17) et ainsi qu'un bourrelet (15) doté d'une âme (18) et disposé autour de l'ouverture, les renforts (17) étant enroulés autour de l'âme (18) de telle sorte que les renforts (17) forment dans la paroi du soufflet une zone rigidifiée dans laquelle les renforts (17) sont doublés, et dans lequel le plateau de serrage (1) présente un fond (6) de plateau de serrage et un logement (3) de bourrelet qui fixe le soufflet déroulant (14) sur le piston déroulant (2) de l'amortisseur à soufflet déroulant,
**caractérisé en ce que**
le logement de bourrelet est configuré comme rainure annulaire (3) concentrique par rapport à l'axe principal (5) du plateau de serrage (1), disposée dans la zone de fond (6) du plateau de serrage (1) et dont le diamètre moyen est plus petit que le diamètre extérieur du plateau de serrage (1), le diamètre de l'ouverture et de la rainure (3) étant dimensionné de telle sorte que la zone rigidifiée de la paroi du soufflet est éloignée de la bordure (9) du piston en direction de l'axe central de l'amortisseur pneumatique, vient se placer entre le plateau de serrage (1) et le piston déroulant (2) et ne pénètre pas dans le bord déroulant (10).
